# EUROPEAN PATENT APPLICATION

(11) **EP 2 706 487 A1**
(43) Date of publication of application: **12.03.2014**
(21) Application number: 12176858.4
(22) Date of filing: 18.07.2012
(51) Int. Cl.: G06N 99/00

(54) **Method and system for crowd detection**

(71) Applicant: ATS Group (IP Holdings) Limited, Road Town, Tortola (VG)
(72) Inventor: Kaisser, Michael, 64295 Darmstadt (DE)
(74) Representative: Börner, Robert

(57) **Abstract**

A computer implemented method, computer program product and computer system for crowd detection. The computer system (1000) receives through an interface (1006) a plurality of user generated data records from a social media data storage (SMDS1, SMDS2) component, wherein a user generated data record comprises a text portion. A location extractor (1001) extracts location information from a subset of the user generated data records being associated with geographic locations. A time identifier (1002) identifies in the subset time information being associated with the extracted location information. A trained machine learning system (1004) an indicator for crowd formation, wherein the indicator is an output of the machine learning system in response to an input pair of associated location information and time information.

## Description

### Technical Field

The present invention generally relates to electronic data processing, and more particularly, relates to methods, computer program products and systems for crowd detection.

### Background

Uncontrolled formation of crowds can result in dangerous situations if, for example, a crowd gets out of control. Therefore, security forces typically have an interest to monitor the formation of crowds and their movement in order to take corresponding precautionary measures to avoid critical situations.

Crowd formation and crowd movement can be observed and tracked in standard video based surveillance systems. More modern approaches are based on using mobile device signals to determine crowd sizes and to track the movement of the crowd.

Such approaches typically need a sophisticated technical infrastructure. In the case of video surveillance video camera networks are usually connected to so-called control centers, where operators supported by powerful video analytics functions try to identify suspicious events in the video stream which may indicate the formation of a crowd. Such an infrastructure is normally complex and static and, as a consequence, only crowd formation can be detected, which occurs in the field of view of the respective cameras.

Approaches using mobile device signals are more flexible in terms of the locations where crowd formation is detectable, because no fixed infrastructure is needed as the crowd participants carry the sensors needed for crowd detection. Still, this approach can only be used if the crowd participants have registered their mobile devices to participate in respective tracking services. Participants not carrying a mobile device or not being registered would not be considered at all, which may lead to severe underestimation of the crowd size. Still, a standardized mobile infrastructure with respective tracking services is required.

Both approaches allow crowd detection once crowd formation has already started. In one case people need to be already moving in the field of view of the camera surveillance network. In the other case people need to be moving to a common place with their registered mobile devices. The moment of detection may already be far too late to take effective precautionary measures for crowd control and prevention of danger, for example, by security forces.

### Summary

There is therefore a need for a technical system to detect crowd formation in an earlier stage without a need of specialised technical infrastructure. Ideally, the formation of crowds should be predictable at a point in time which is well ahead of the actual start of crowd formation so that security forces or event organizers would have sufficient time to take all necessary actions for controlling the crowd formation.

This technical problem is solved by various embodiments of the invention as described by the independent claims. Embodiments of the invention can be a computer implemented method for crowd detection, a computer program product, which can be loaded into a computer system, and the computer system, which can execute the computer implemented method when running instructions of the computer program product.

The computer implemented method starts with receiving on a computer a plurality of user generated data records from a social media data storage component. The user generated data records can be received through an appropriate interface of the computer which is configured to communicate with social media services such as FACEBOOK or TWITTER. A user generated data record can be, for example, a tweet on TWITTER or a post on FACEBOOK. Such user generated data records generally have a text portion, where the users provide some information, which they want to convey to other users of the social network. The text portion may also include fields, which are automatically filled by the respective social media system. There may be huge amounts of data records which could be pre-filtered according to certain aspects of interest.

Some user generated data records can be associated with location information. For example, the text portion of such a user generated data record may include a specific street name or the name of a site. There may also be other information included like a name of a rock band or of a soccer team, which is not directly associated with a location but which may implicitly include location information because the band will give an upcoming concert at a known location and the soccer team will participate in a soccer match in a certain sports stadium the next day. Location information may also be included in metadata of a user generated data record. For example, the data record may be tagged with GPS coordinates of the user when a post was made through a device being equipped with a GPS sensor or may contain metadata as a string denoting a location name. Location information can also be included in a user's profile, e.g., the user's home address which may be associated with his/her IP address. The computer can then extract the location information from a subset of the user generated data records which are associated with geographic locations. Reducing the number of user generated data records to those included in the subset reduces the workload of the computer system when performing the following analysis tasks.

The subset having such location associations is interesting in terms of identifying locations with a high probability of many people showing up at the same time. Therefore, the computer system can now identify time information being associated with the extracted location information in the subset of the user generated data records. Time information can be included in the text portion of a respective data record. For example, "the match tomorrow", "I will leave in 10 minutes", "Let's meet in front of the entrance 1 hour before the beginning of the concert", etc. Time information can also be implicitly included in the metadata of the data record. For example, the time of the post.

Based on the extracted data about geographic locations and associated time information the computer uses a machine learning system, which is trained accordingly, to detect an indicator for crowd formation. The indicator can be an output of the machine learning system in response to an input pair of associated location information and time information and may be detected when at least a predefined number of user generated data records of the subset falls within a respective environment around the input pair. Input pair as used hereinafter relates to a query to the machine learning system. That is, input pairs are used to ask questions to the machine learning system. Such an environment can be defined as a region around the alleged location of the crowd formation within a certain radius of the geographic location within a certain time interval. Input coordinates can originate in the computer system itself. In one mode of operation, each incoming social media post can function as an input coordinate. The computer system can then check for each new message or post if something is happening around this location. Input coordinates can also be triggered from outside the computer system. For example, an operator can trigger the system to check a certain location of interest.

As a result the computer implemented method derives an estimate of the size of a crowd which is expected to form at the identified geographic location at the time derived from the identified time information. This result can be obtained before the first potential crowd participant even starts to move into the direction of the identified geographic location. That is, authorities will have much more time to prepare for controlling the crowd than they would have available when using the traditional crowd tracking systems. Further, there is no need at all for any specific technical infrastructure. The only infrastructure which is needed is to support the ability to connect to a social network (e.g., via the Internet). Because of the large numbers of Social Network users the inventive method increases the probability to include relevant data from more potential crowd participants than the mobile device based solution of the prior art. Further, the Social Network does not have any physical location boundaries as they exist in a static camera surveillance system. This allows to also including in the estimate of the crowd size potential crowd participants being still far away from the geographic location of crowd formation at the time crowd formation is detected. This is possible, because crowd forming detection according to an embodiment of the invention is occurring before physical crowd forming takes place. Crowd detection in the sense of the invention can also be seen as the prediction of physical crowd forming with a certain probability. Embodiments of the invention can also be used in combination with existing crowd detection approaches as they are described in the background section. For example, if a prior art based system has recorded not enough events to make a qualified statement with regards to a potential crowd movement, the social network based approach according to the invention can be used to substantiate or deemphasize a respective suspicion.

In some cases location and time information extracted from user generated data records may not be absolutely unambiguous. For example, a location association between a user generated data record and a geographic location may have a certain location reliability and the extracted location information can be tagged with a location confidence score dependent on the respective location reliability. Further, a time association between an identified time information and a user generated data record with a location association can be tagged with a time confidence score dependent on the respective time reliability.

An optional embodiment of the invention builds on the detection of crowd formation and further extends this by the capability of crowd movement detection. In this embodiment the computer system detects a further indicator for crowd movement with the machine learning system which is trained accordingly. The further indicator can be a further output of the machine learning system in response to an input pair of pairs of associated location information and time information. The input pair of pairs represents the potential movement of a crowd of people for one location to another location over time. The movement implication can relate to a current movement but also to a future movement. With respect to future movements again the time interval for authorities to react to upcoming movements is increased compared to the existing movement tracking systems.

Embodiments of the invention can support authorities, security forces, event organizers, etc. in taking preventive actions to control future crowd formation and crowd movement, thus avoiding damages, injuries, riots and chaotic situations. By applying machine learning algorithms to user generated data records from social media system, the processing speed for large amounts of posts is improved while at the same time the system's prediction accuracy is improved.

Further embodiments and advantages of the invention are described by the dependent claims.

### Brief Description of the Drawings

FIG. 1 is a simplified component view of a computer system according to one embodiment of the invention, communicatively coupled with social media;
FIG. 2 is a simplified flow chart of a computer implemented method according to one embodiment of the invention;
FIG. 3 is a simplified conceptual view of a machine learning system component as it is used in embodiments of the invention; and
FIG. 4 illustrates details of feature vector extraction as used by embodiments of the invention.

### Detailed Description

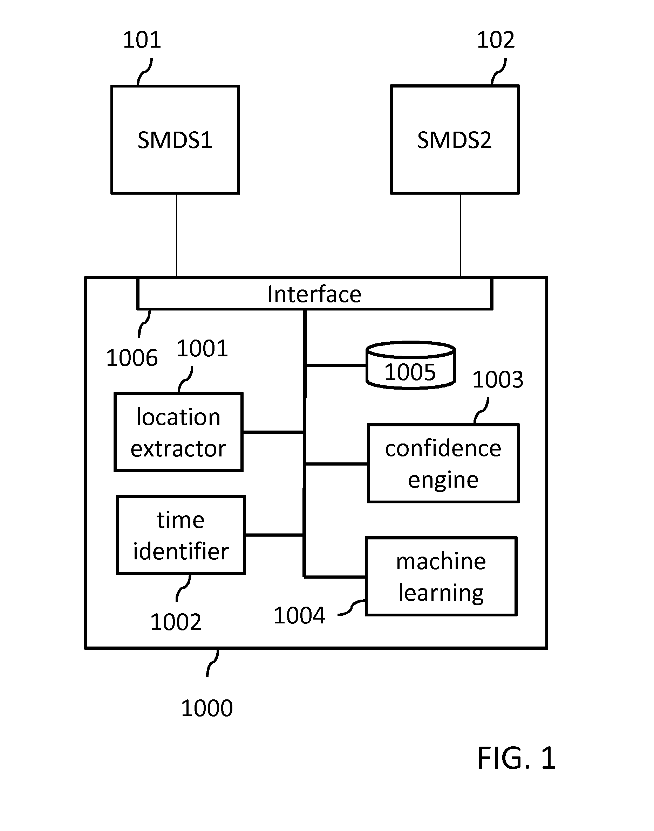

FIG. 1 is a simplified component view of a computer system 1000 according to one embodiment of the invention, communicatively coupled with social media 101, 102. The social media have their respective data storage components SMDS1, SMDS2, which are configured to track and store all kinds of information, which is generated in the social media. For example, in the case of TWITTER being the first social media 101, SMDS1 can include one or more storage devices for storing tweets generated by the users of the TWITTER system. Tweets are a specific embodiment of user generated data records in general. In the case of FACEBOOK being the second social media 102, SMDS2 can include one or more storage devices for storing posts generated by the users of the FACEBOOK system. Such data storage components are typically accessible via public application programming interfaces (APIs) for retrieving content from social media sites. Retrieving information through APIs can provide current information content, such as tweets or posts, which can be retrieved in near real-time. Near real time in this context means that the retrieval of content can occur immediately after the content has been created.

In one embodiment the computer system 1000 has an interface component 1006, which is configured to receive a plurality of user generated data records from the social media data storage component(s) SMDS1, SMDS2. Typically, such user generated data records, like tweets or posts, comprise a text portion where the user is writing a message. But also other portions of the user generated data record can include text portions (e.g., a text for location information with regards to the user's current location in the metadata or such a data record). For example, the received user generated data records can be stored for analysis purposes in one or more data storage components 1005. A data storage component 1005 can be an integral part of the computer system 1000 and be communicatively coupled with the interface component 1006. In alternative embodiments data storage component(s) may be external to the computer system and connected through any suitable communication network. For example, storage components can be servers in a cloud architecture and communicate with the computer system via the Internet. For example, the data storage component can be provided by a third party, e.g., a social media company generating the social media data.

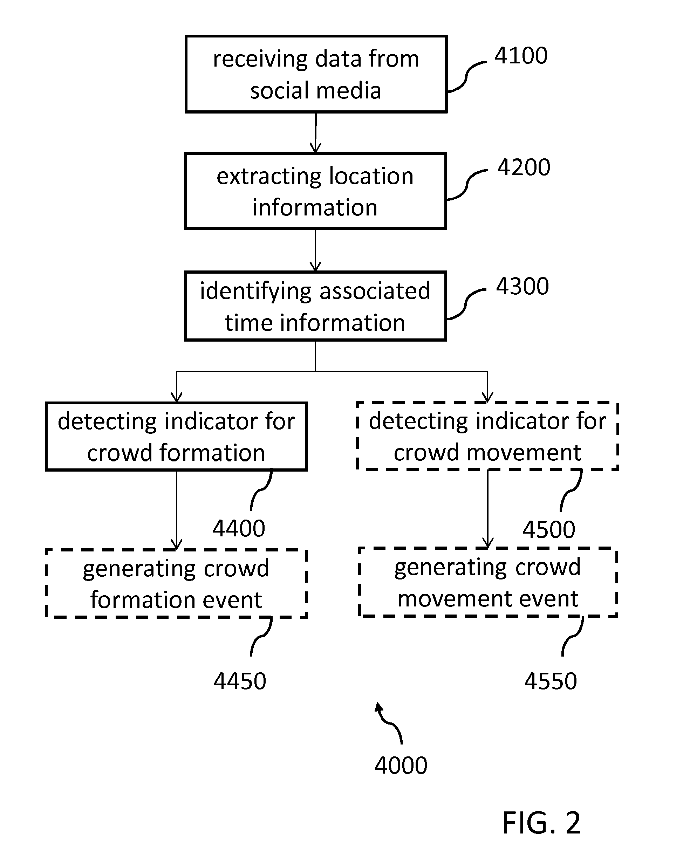

The computer system further has a location extractor component 1001. The location extractor 1001 can be coupled with the interface component 1006, for example if real time analysis of the received data records is important. In such a case the location extractor 1001 may have a cache memory to store the received data records intermediately for performing location extraction. The location extractor may also be coupled with the data storage component 1005, where the received user generated data records are persisted. In this embodiment the location extractor can perform an asynchronous location extraction because the data records do not need to be processed immediately when they are received but can be analyzed anytime later on. The location extractor is configured to extract location information from a subset of the user generated data records being associated with geographic locations. Details of different mechanisms of location information extraction are described under FIG. 2.

The computer system further has a time identifier component 1002. The received user generated data records can be provided to the time identifier 1002 in a similar way as they are provided to the location extractor 1001. The time identifier 1002 is configured to identify time information being associated with the extracted location information. For this purpose the time identifier 1002 can analyze the subset of user generated data records being associated with geographic locations, for example, by parsing the text portion of each data record of the subset; and generating a plurality of associated data triples, wherein each associated data triple has associated location information, time information and user generated data record information. Details of different mechanisms of time information identification are described under FIG. 2.

In one embodiment of the computer system the location extractor 1001 and/or the time identifier 1002 can make use of an optional confidence engine component 1003 of the computer system. The confidence engine 1003 can communicate with the location extractor and/or time identifier via internal component interfaces or a kind of communication bus structure.

The confidence engine 1003 can be configured to calculate a location confidence score for a location association of a user generated data record being associated with a geographic location, wherein the location confidence score is based on a respective location reliability. This allows facilitating the selection of a relevant geographic location in case the location extractor was able to extract multiple instances of location information. Each of those instances can have a specific confidence score and the most relevant geographic location for further processing may be the one having the highest confidence score. The computer system can then decide to use the location information associated with the highest confidence score for the further crowd formation detection steps.

The confidence engine 1003 can also be configured to calculate a time confidence score for a time association of a user generated data record with a location association, wherein the time confidence score is based on a respective time reliability. This allows facilitating the selection of a relevant time location in case the time extractor was able to extract multiple instances of time information associated with a specific location information. Details of different mechanisms of confidence score calculation are described under FIG. 2.

Using confidence scores can improve the quality of location and time prediction of future crowd formation because only the most reliable extraction and identification results may be used. Further, processing time and effort of the computer system can be reduced significantly because the following steps for crowd formation detection may only be executed for the most likely combination of location and time information instead of performing the calculations for all possible combinations.

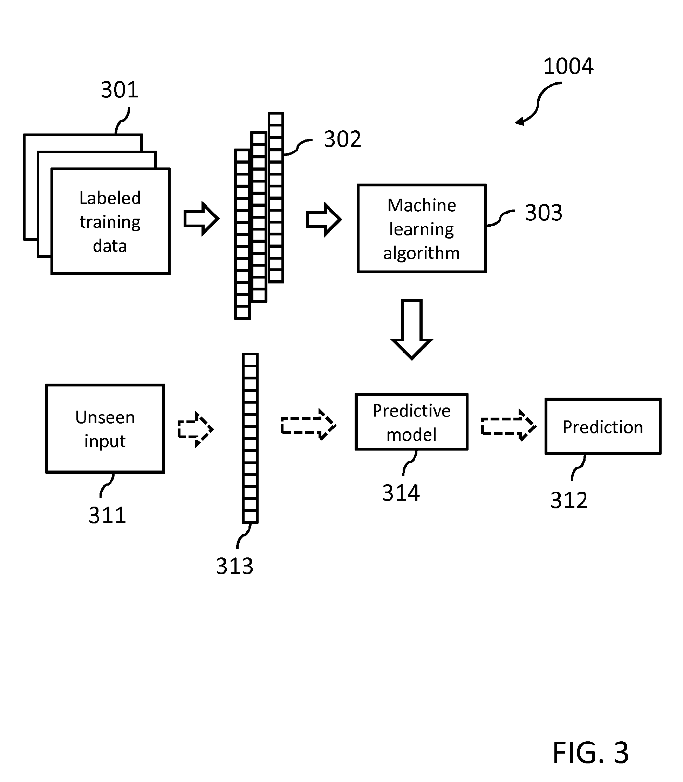

The computer system further has a trained machine learning system component 1004. The machine learning system 1004 uses the extracted location information and the identified time information from a plurality of user generated data records to detect possible crowd formation. The machine learning system is queried during runtime with an input pair of associated location information and time information to pose the question to the system: is or will a crowd form at the specified location at the specified time? The output of the machine learning system is a numerical value indicating the magnitude of the crowd expected to form at the specific location corresponding to the input information. This output, which corresponds to a prediction of a size of an expected crowd, can be used as an indicator for crowd formation. Details about the machine learning system are described under FIG.3. The same machine learning system component 1004 can further be trained to detect an indicator for crowd movement. In such a case the system is queried during runtime with an input pair of a pair of associated location information and time information to pose, the question to the system: is or will a crowd moving or move from a first specified location to a second specified location within the specified time frame? The output of the machine learning system in that case is a numerical value indicating the magnitude of a crowd expected to move from one specific location to another location.

FIG. 2 is a simplified flow chart of a computer implemented method 4000 for crowd detection according to one embodiment of the invention. The method includes receiving 4100 data from social media, extracting 4200 location information, identifying 4300 associated time information and detecting 4400 indicator for crowd formation. Optionally, the method can include generating 4450 crowd formation event in case a crowd formation indicator was detected. Further, the method can include detecting 4500 indicator for crowd movement, which can lead to generating 4550 a crowd movement event. Generating 4400 crowd formation event and detecting 4500 indicator for crowd movement can be independent from each other and may be executed in parallel.

The method will now be explained in more detail by way of an example. The example has explanatory purpose only and is not intended to limit the scope of the invention as claimed in any way.

In the receiving step 4100 the computer system can receive a plurality of user generated data records from a social media data storage component through a corresponding interface. The user generated data record typically comprises a text portion. For example, the social media data storage components of social media such as TWITTER or FACEBOOK may store tweets or posts (user generated data records) having a format like (username; time; location; text message). The text portion of a user generated data record can have sub-portions corresponding to the various text sections of the post, such as the username, location of text. Such sub-portions may also include respective metadata information as explained earlier.

The following example shows three possible posts (post 1., post 2., post 3.) stored on anyone of the respective social media data storage components in the example format.
1. User1; June 10, 18:24; Mile End, London; "Radiohead FREE Gig, tomorrow 16:00, Hyde Park, London. Join me."
2. User2; June 11, 14:35; [no location]; "Going to see Radiohead in Hyde Park this afternoon!!!! Can't wait."
3. User3; June 11, 17:24; 51.5067,-0.1580; "At Radiohead Gig, Wooohooo!!!!!"

Posts like the above can be either pushed to the computer system, e.g., when the computer system subscribes to a corresponding push service at the respective social data storage component, or the computer system can actively pull the posts from the social media storage components, for example using specific keywords as selection criterion. The pull embodiment based on keywords already implicitly includes a filter function to reduce the number of user generated data records to a size, which becomes processable by the computer system. Of course, also any user generated data record could be pulled resulting in a huge amount of data being imported to the computer system. Also in the push embodiment a filter function can be used as part of the subscription service by using any appropriate filter criteria. For example, for selecting and receiving above example posts, the following filter keywords may have been used: "Radiohead", "Hype Park", "London" etc. In addition or alternatively one may use a less specific filter criterion, such as "getting all tweets from within London", which would likely result in many more user generated data record hits than the more specific examples.

The computer system will then try to assign geographic locations to the respective posts. For this purpose the computer system can extract location information from a subset of the user generated data records being associated with geographic locations. In our example above, this subset corresponds to the full set of posts because the posts were already selected with regards to an event which will take place at a specific geographic location. However, in case of using less specific filter criteria many more posts could be received by the computer system, which are not associated with location information. In this case, the computer system can extract location information only from the subset of data records, where such information is available.

All locations, mentioned directly or indirectly in a user generated data record can be analyzed and mapped to geo-coordinates. For some posts the computer system may extract multiple locations.

Post 1:
● The location field contains: "Mile End, London". This can be looked up in a gazetteer or sent to a geocoder, and can then be mapped to corresponding geo-coordinates. A gazetteer is a geographical dictionary or directory, an important reference for information about places and place names, used in conjunction with a map or a full atlas. It typically contains information concerning the geographical makeup of a country, region, or continent as well as the social statistics and physical features, such as mountains, waterways, or roads. Examples of information provided by gazetteers include the location of places, dimensions of physical features, population, GDP, literacy rate, etc. This information is generally divided into overhead topics with entries listed in alphabetical order. A geocoder can find associated geographic coordinates (often expressed as latitude and longitude) from other geographic data, such as street addresses, or zip codes (postal codes). An example of a simple method of geocoding is address interpolation. This method makes use of data from a street geographic information system where the street network is already mapped within the geographic coordinate space. Each street segment is attributed with address ranges (e.g., house numbers from one segment to the next). Geocoding takes an address, matches it to a street and specific segment (such as a block, in towns that use the "block" convention). Geocoding can then interpolate the position of the address, within the range along the segment. Commercial geocoders are available from providers, such as, for example GOOGLE or YAHOO.
● Scenario-specific gazetteers can be used to map non-location entities to geographic locations. For example, one may specify that one is interested in a Radiohead concert, which will take place in Hyde Park. This allows mapping "Radiohead" or "Radiohead Gig" to Hyde Park's geographic coordinates by using the scenario-specific gazetteer.
● "Hyde Park" is also mentioned directly, and can be directly mapped to geographic coordinates again by using the gazetteer and/or geocoder. In case of multiple "Hyde Park" locations, one can use the poster's (user's) location "Mile End, London" to disambiguate and determine that one is looking for London's Hyde Park.

Post 2:
● Post includes "Radiohead" (same extraction mechanism as described for post 1).
● Post includes "Hyde Park", (same extraction mechanism as described for post 1).

Post 3:
● This post includes geo-coordinates from which it was sent as metadata. Such metadata can be directly used by the computer system.
● Post mentions "Radiohead Gig", (same extraction mechanism as described for post 1).

In one embodiment the computer system can support the assignment of location confidence scores that indicate a location reliability in terms of how reliable it is that a certain extracted text string (e.g., extracted location information: "Hyde Park", "Radiohead", "city center") is really associated with a specific geographic location. Such a location association may exist at any time or only during a certain time interval. For example, the location association of "Radiohead" and "Hyde Park" may only make sense for a time interval starting with the announcement of the Radiohead concert and ending a few hours after the end of the concert. The location confidence scores can be manually assigned by an operator of the computer system or they can be automatically assigned by the computer system by using known algorithms, as described for example in "Web-a-Where: Geotagging Web Content" by Einat Amitay, Nadav Har'El, Ron Sivan, Aya Soffer, Proceedings of SIGIR'04, 2004, Sheffield, UK.

Once the location information is extracted the computer system tries to allocate time information to the subset of user generated data records having a location association. This is achieved by identifying 4300 in the subset time information being associated with the extracted location information. In other words, the computer system tries to figure out when a poster will be at one of the above extracted locations. Typically a user generated data record includes a time stamp. However, such a time stamp provides primarily the information about when the respective post was issued or posted by the respective user. Therefore, in order to identify time information, which is associated with the time when the user will be at the extracted geographic location can further use additional information from the posts which is typically found in the respective text portion. For example, for identifying the time information the computer system may parse the text portion of each user generated data record of the subset and generate a plurality of associated data triples, each associated data triple having associated location information, time information and user generated data record information.

The following examples based on the three posts of the example illustrate various mechanisms of how to identify such a time association.

Post 1:
● Post includes: "tomorrow 16:00" together with a timestamp (June 10, 18:24). By combining the time related information in this post it can be resolved that the user is expected to be at the respective geographic location at "June 11, 16:00".

Post 2:
● Post includes: "this afternoon" together with the time stamp (June 11, 14:35), which can be resolved to the time period June 11, 14:00-18:00. For example, the computer system may support manual assignments of certain words indicating a time to configurable time periods. In the example it is assumed that "afternoon" is mapped to the time interval from 2 pm to 6 pm.

Post 3:
● Post includes: "At Radiohead Gig", which for example matches a predefined pattern, such as:
   "[start_of_post|punctuation_mark] At [location|event]"
   Such predefined patterns can be regular expressions or any variant thereof that optionally may support various information on a linguistic level, e.g., part-of-speech (e.g., "noun"), syntactic phrase categories (e.g., "noun phrase"), Named Entities (e.g., "place name" or "rock band"). The above example pattern may indicate that the user is at the specified location right now. In one embodiment the computer system can support the assignment of time confidence scores that indicate a time reliability in terms of how reliable it is that a certain identified time is really associated with the respective specific geographic location, which was extracted from the same user generated data record. In other words, the identified time association, which is based on a specific pattern or mechanism, may have a certain time confidence score, dependent on how reliable the used pattern or mechanism is. The time confidence scores can be manually assigned by an operator of the computer system or they can be automatically assigned by the computer system in a similar fashion as for the location extraction. Respective methods and algorithms are described in "Recent developments in temporal information extraction.", Inderjeet Mani, In Proceedings of Recent Advances in Natural Language Processing, 2004.

In case that the extracting 4200 steps extracts more than one geographic locations, the computer system takes a decision on which of the geographic locations the further procedure will be based on. As explained above, post 1 includes three mentions of locations; posts 2 and 3 include two locations each. Standard heuristics can be used to resolve this problem and take the decision. In the example one could prefer locations, which are mentioned in the user written text over those which can be derived from the dedicated location field because it may be more interesting where the user will be, rather than where the user is right now. The latter corresponds to the information obtained from the location information field. In case of multiple mentions of locations in the user written text, one can:
● Check whether they all indicate the same location, as for example in post 1, where "Radiohead Gig" and Hyde Park" resolve to the same geographic location;
● Choose the location which is from the most reliable source or where the source is associated with the highest location confidence score. For example, small manually created, scenario-specific dictionaries/gazetteers could be preferred over generic gazetteers;
● Use a linguistic pattern that tells which location belongs to which time, e.g., "at [time] I will be in [location]"; or
● Choose the location that is closest to the extracted time.

Finally the computer system can detect 4400 an indicator for crowd formation by using the machine learning system component, which is trained accordingly. The indicator corresponds to the output of the machine learning component, which is calculated on the basis of an input pair of associated location information and time information, where at least a predefined number of user generated data records of the subset fall within a respective environment around the input pair.

For embodiments of the invention it is not relevant which machine learning algorithm is used. machine learning algorithms typically use a set of so-called features, essentially attributes extracted from instances of the training data. All features of an instance combined can form a feature vector. The features may be designed in a way, so that the machine learning algorithm has the best possible chance of making correct predictions. The features which are used for embodiments for the invention are very different from such features, which are used to perform crowd detection based on the above described prior art solutions implemented with surveillance cameras or mobile devices.

Embodiments of the invention use features extracted from social media posts (user generated data records), which allow predicting crowd formation based on Social Media posts in a cheaper, easier, less complex and better way than the prior art solutions. To find out where in a certain geographic region (e.g., a city, a country, etc.) a crowd of people will form, the inventive computer system is asked whether crowd formation can be expected to happen at or in the vicinity of an input coordinate at a certain time. This can be formulated as an input pair [coordinate, time] of associated location information and time information. The data analyzed in the extracting 4200 and identifying steps are the basis for making a decision with regards to the question of how many people have declared their intention to be at this place on Social Networks? In real user generated data records, as shown by the above example, location information related to different entities (places, streets, non-location entities, etc.) is resolved to geographic locations. One may not expect that all posts resolve to the exact same coordinates or geographic location. For this reason one embodiment of the invention works with radii around the input coordinates.

FIG. 3 is a simplified conceptual view of machine learning 1004 as it may be used in embodiments of the invention. The solid line arrows represent the training part of machine learning, which is executed before the machine learning system component is run. The dashed line arrows illustrate what happens when the machine learning system is in operation and used to detect or predict whatever the machine learning has been trained for (e.g., crowd formation or crowd movement detection).

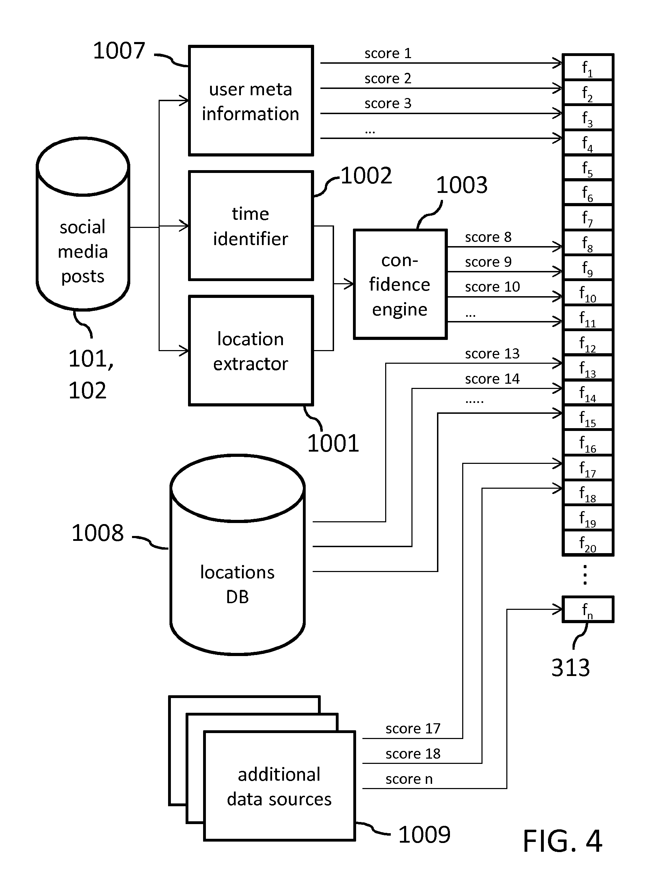

Training data 301 is transformed into feature vectors 302. A more detailed view on how feature vectors are computed according to embodiments of the invention is given under FIG. 4. The feature vectors 302 are used by the machine learning algorithm 303 to compute a predictive model 314, which can then be used in the machine learning system in operation to make predictions. During execution time (in operation) the system may receive new unseen input 311. The unseen input represents the current situation on which basis a prediction is to be made. This new input has the same format as the training data 301, and can be transformed into a corresponding feature vector 313 having the same format as the feature vectors 302 used during training. The feature vector 313 serves as input to the previously created predictive model 314, which can now make respective predictions 312. In the context of the invention a prediction is about a crowd forming event happening at a specific location at a specific time.

FIG. 4 illustrates details of feature vector 313 extraction as used by embodiments of the invention and in particular the data sources from where features may be extracted. In the following, feature vector extraction and the respective sources are described in more detail. As mentioned before, the system is queried with an input pair of coordinates and time information [coordinates, time]. Other input may come from Social Media sources 101,102 like FACEBOOK or TWITTER. Various kinds of processing can be performed on these sources, e.g., location extraction 1001 and time identification 1002, which can be fed into an optional confidence engine 1003. The computer system may then, for example, derive a table like the following table 1, which includes the number of posts of users declaring their intention to be at a certain location within a certain radius around the input coordinates in a given time frame around the input time.

**Table 1**

| **radius** | **# posts** |
|---|---|
| **50 m** | 12 |
| **100 m** | 16 |
| **250 m** | 40 |
| **500 m** | 90 |
| **1000 m** | 230 |

Each value in this table may result in a feature f₁ to fₙ. Before this happens further normalizations, conversions and/or computations may be performed on these values resulting in the respective scores (score 1 to score n.). For example, confidence scores computed by the confidence engine 1003 can be taken into account. Several such computations can be carried out for different time intervals and become part of the feature vector 313. That is, the time dimension may also be taken into account by using the same table or multiple tables at different points in time.

Additional features can be derived from users' meta information 1007. These may include statistics about the users' age, gender, how active they are on Social Networks or their online reputation.

A locations database 1008 keeping records of locations, and their properties may also feed into the feature vector 313. The locations database might contain information about how often a certain location is mentioned on average in Social Media sources and how often crowd forming activities were observed in these locations before, and at what times. The locations database may also contain contextual information that, for example, may indicate how densely populated a location is.

A variety of additional data sources 1009 can also be used as input features of the feature vector 313 for the machine learning system. These may include temporal information, such as time or date information (e.g., for answering the question whether the date in question is a public holiday) or metrological information. Additional data sources 1009 can also be systems or parts of systems described in the prior art, where crowd detection is performed based on video based surveillance systems or mobile device signals.

During execution time (in operation) the machine learning component can be queried with an input pair including a location coordinate and a respective time value. This input can be converted into a feature vector by taking into account input from other system components, such as for example the location extractor 1001 and time extractor 1002, as described in FIG 4. In response it may return a numerical value indicating the magnitude of the crowd expected to form at this location at the specified time. For example, the machine learning component may return a value of 0 or close to 0 if no crowd is expected to form at the specified location at the specified time.

The system may support various strategies in order to determine the location coordinates used as input for the machine learning component:
1. In a first strategy an operator can manually query the machine learning system component by entering a set of location coordinates and a time interval. In this task the operator may be assisted by a graphical user interface providing, for example, a map and a time slider, which can simplify the input of coordinates and time information. The operator may click on the map to indicate the location coordinates and may use the time slider to select start and end points of an appropriate timer interval.
2. In a second strategy each new post being received by the computer system from the Social Media store 101,102 can immediately be used to query the machine learning system with the location information it contains.
3. In a third strategy the locations extracted by the location extractor can be kept in an internal data structure that keeps track of how often they were mentioned in user generated data records during a specific time interval (e.g., during the last 6 hours). The most frequent locations occurring in posts can then be used to query the system periodically (e.g., every 20 seconds) or at irregular time intervals (e.g., dependent on specific events).

If strategies 2 and 3 are used, the system is unlikely to miss important developments contained in the Social Media posts, as it uses these posts and the information contained therein (user generated data records) as input for the machine learning algorithm.

Returning now to FIG. 2, once the computer system has detected 4400 an indicator for crowd formation it may generate 4450 an event if the indicator for crowd formation exceeds a predefined threshold. Such a predefined threshold can for example be defined in relation to the estimated crowd size. Crowd size magnitude is usually reported in multiples of hundreds, thousands, etc. For example the predefined threshold may be set at 100 people and the generated event when exceeding this threshold can be a notification to an operator of the computer system like for example: "A crowd of 200 is likely to form at Hyde Park on June 11, 14:00"

In one embodiment the computer system may also be used to detect 4500 a further indicator for crowd movement by using the machine learning system component, which can be trained accordingly. While for crowd detection the system uses data triples including associated location information, time information and user generated data records, that contain information about where one person stays at a given point time is, for crowd movement the computer system uses pairs of data triples including associated location information, time information and user generated data records. Such data triples may include information about who will be going from where (start location) to where (target location). For this purpose a pair of data triples may include individual data structures like: [[time1, coordinate1, post1], [time2, coordinate2, post2]], where a pair of data triples for a same user may differ in the location or time information, which can indicate a future or current movement of this user. For the prediction of crowd movement by the machine learning system the information about the moving individual person is irrelevant. Only the information about the total number of moving users is interesting. Therefore, for querying the machine learning system, input pairs of pairs (location, time) are sufficient. The data triples are not needed for the machine learning input. Data triples form part of the data which is queried in the machine learning system. Input pairs of pairs are used to take into account the difference in the location or time dimension. The further indicator for crowd movement can be the output of the machine learning component in response to an input pair of pairs of associated location information and time information.

Detecting not only the formation, but also the movement of crowds gives event organizers and/or security forces the chance to react early to changing situations. For example if it can be reliably predicted that most people of a crowd will move from a start location A to another identified target location B (e.g., in case of another event preceding the event triggering the crowd formation),security forces may be concentrated around potential alternative routes to get from A to B. On the contrary, if people move to the target location B from all possible kinds of start points (e.g., from their homes), a concentration of people may only occur in close proximity to the target location B, which may lead to allocating security personnel close to or around the target location. In other words, dependent on the crowd movement detection with respect to start and target locations the system may identify possible alternative routes for the crowd movement.

The system setup for detecting crowd movement differs from the setup for crowd formation. To detect or predict crowd movement the same machine learning system 1004 (FIG. 3) may be used as for the detection/prediction of crowd formation. Also the same input sources may be used for feature generation (FIG. 4). However, the individual computed scores forming the feature vector may be different, since the task of crowd movement requires not just one set of coordinates indicating the location of a person, but also additional information about where this person is moving to from this location. Consider the following two examples of user generated data records:
1. User1; May 12, 19:17; "Lower Haight, San Francisco", "Tomorrow afternoon we are marching from Union Square to City Hall. Help save the polar bears!"
2. User2; May 13, 15:35; 37.7858,-122.4129; "Police don't like polar bears! City hall cordoned off! We'll block Market Street instead! Meet Montgomery Street BART."

The extraction of time and location information from such posts is the same as described earlier. In order to detect crowd movement, the extracted data may be stored in data structures like [[time1, coordinate1, post1], [time2, coordinate2, post2]], that is, in pairs of triples, where both triples originate from the same user. The interest is in persons currently moving from coordinate1 to coordinate2 or declaring their intention to move from coordinate1 to coordinate2. This information may be contained in a single post, or can be distributed across two or more posts. For example, a person may state in one post where the person is, and later posts where he/she wants to go.

By combining several of such data structures, the computer system may for example derive a table like table 2. In the example of table 2 the first column may list radii around the start coordinates (e.g., location coordinates of Union Square) and the first row may list radii around the target coordinates (e.g., location coordinates of City Hall). A cell of table 2 includes the number of posts indicating that a person intends to move from the start coordinates to the target coordinates, taking the given radii around the coordinates into account as well.

**Table 2**

| **radius** | **50m** | **100m** | **250m** | **500m** | **1000m** |
|---|---|---|---|---|---|
| **50 m** | 3 | 3 | 10 | 11 | 17 |
| **100 m** | 5 | 5 | 11 | 14 | 22 |
| **250 m** | 8 | 11 | 11 | 21 | 32 |
| **500 m** | 10 | 15 | 17 | 33 | 45 |
| **1000 m** | 12 | 23 | 24 | 41 | 76 |

The cells of table 2 may become features f₁ to fₙ in the feature vector 313, possibly after further normalizations, conversions and/or computations have been applied to them resulting in respective scores.

Features from sources like user meta information 1007, locations database 1008 and additional data sources 1009 are derived in a similar fashion for crowd movement as they are derived for crowd formation. Differences may exist because crowd movement requires two locations: the start and target location. Therefore, context information for both locations may be retrieved from the respective sources.

The machine learning component 1004 of the system can be queried to determine whether a crowd will move from one place to another in a given time interval by passing two coordinates (start and target location coordinates) and time information as input. In other words, a further output of the machine learning system which is calculated in response to an input pair of pairs of associated location information and time information corresponds to a further indicator for indicating crowd movement. As in the case for crowd formation, the system also may support various strategies in order to determine the pair of coordinates used to query the machine learning component. These may include:
1. Manual querying by an operator.
2. Automatic querying of the system based on new Social Media posts that contain first indications of crowd formation.
3. Automatic querying of the machine learning system based on statistics of frequently mentioned locations or, in the case of crowd movement, pairs of locations in a certain time interval.

Additionally, for crowd movement 4500 the system can make use of the input from crowd formation detection 4400. If a crowd formation has already been detected the start point for crowd movement and the corresponding expected time is already known. This information can be passed on to the crowd movement detection. Possible target coordinates can be determined as described earlier

Once the computer system has detected 4500 an indicator for crowd movement it may generate 4550 an event if the indicator for crowd movement exceeds a predefined threshold, in a similar fashion as in the case of crowd detection. Such a predefined threshold can, for example, be defined in relation to the estimated crowd size. Crowd size magnitude is usually reported in multiples of hundreds, thousands, etc. For example the predefined threshold may be set at 100 people and the generated event when exceeding this threshold can be a notification to an operator of the computer system like for example: "A crowd of 800 is likely to move from Union Square to Market street on May 13, 15:35"

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program as claimed, can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The method described under FIG. 3 can all be executed by corresponding computer products on the respective devices, e.g., the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, optical disks or solid state disks. Such storage devices may also provisioned on demand and be accessible through the Internet (e.g., Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

## Claims

1. A computer implemented method (4000) for crowd detection, comprising:
receiving (4100) through an interface (1006) a plurality of user generated data records from a social media data storage (SMDS1, SMDS2) component, wherein a user generated data record comprises a text portion;
extracting (4200) location information from a subset of the user generated data records being associated with geographic locations;
identifying (4300) in the subset time information being associated with the extracted location information; and
detecting (4400), with a machine learning system component (1004) which is trained accordingly, an indicator for crowd formation, wherein the indicator is an output of the machine learning system in response to an input pair of associated location information and time information.

2. The computer implemented method of claim 1, wherein a specific user generated data record being associated with a specific geographic location has a location association, which has a certain location reliability and the extracted location information is tagged with a location confidence score dependent on the respective location reliability.

3. The computer implemented method of claim 2, wherein the specific user generated data record with the location association has a time association, which has a certain time reliability and the identified time information is tagged with a time confidence score dependent on the respective time reliability.

4. The computer implemented method of anyone of the previous claims, further comprising:
detecting (4500), with the machine learning system component (1004) which is trained accordingly, a further indicator for crowd movement, wherein the further indicator is a further output of the machine learning system (1004) in response to an input pair of pairs of associated location information and time information.

5. The computer implemented method of anyone of the previous claims, further comprising:
generating (4450) an event if the indicator for crowd formation exceeds a predefined threshold.

6. The computer implemented method of anyone of the previous claims, wherein the machine learning system (1004) further uses for detecting crowd formation anyone of the following feature groups:
information from a background model having data of how often certain location information is commonly mentioned in text portions of user generated data records within a predefined time interval;
information about crowd formation at the mentioned location information in the past; and
user profile information.

7. The computer implemented method of anyone of the previous claims, wherein identifying (4300) time information comprises:
parsing the text portion of each data record of the subset; and
generating a plurality of associated data triples, each associated data triple having associated location information, time information and user generated data record information.

8. The computer implemented method of anyone of the previous claims, wherein extracting (4200) location information comprises:
deriving location information from a non-location entity in the text portion of a user generated data record.

9. The computer implemented method of anyone of claims 2 to 8, wherein
the location confidence score is above a predefined threshold if location information can be derived by matching a text portion of the data record with a domain specific gazetteer entry specifying a respective geographic location.

10. A computer program product that when loaded into a memory of a computing device and executed by at least one processor of the computing device executes the steps of the computer implemented methods according to of anyone of the claims 1 to 9.

11. A computer system (1000) for detection of crowd formation, comprising:
an interface component (1006) configured to receive a plurality of user generated data records from a social media data storage component (SMDS1, SMDS2), wherein a user generated data record comprises a text portion;
a location extractor component (1001) configured to extract location information from a subset of the user generated data records being associated with geographic locations;
a time identifier component (1002) configured to identify in the subset time information being associated with the extracted location information; and
a trained machine learning system component (1004) configured to detect an indicator for crowd formation, wherein the indicator is an output of the machine learning system in response to an input pair of associated location information and time information.

12. The computer system of claim 11, further comprising:
a confidence engine component (1003) configured to calculate a location confidence score for a location association of a specific user generated data record being associated with a specific geographic location, wherein the location confidence score is based on a respective location reliability.

13. The computer system of claim 12, wherein
the confidence engine component (1003) is further configured to calculate a time confidence score for a time association of the specific user generated data record with the location association, wherein the time confidence score is based on a respective time reliability.

14. The computer system of anyone of the claims 11 to 13, wherein
the machine learning system component (1004) is further trained to detect a further indicator for crowd movement, wherein the further indicator is a further output of the machine learning system (1004) in response to an input pair of pairs of associated location information and time information.

15. The computer system of claim 14, further configured to identify at least one start location and a target location for the detected crowd movement and to identify possible alternative routes for the crowd movement to the target location.
